# EUROPEAN PATENT APPLICATION

(11) **EP 4 053 075 A1**
(43) Date of publication of application: **07.09.2022**
(21) Application number: 20880782.6
(22) Date of filing: 28.10.2020
(51) Int. Cl.: C01B 32/15, B82Y 30/00, B82Y 40/00, C09K 11/65

(54) **CARBON QUANTUM DOT-CONTAINING COMPOSITION AND METHOD FOR PRODUCING SAME**

(30) Priority: 29.10.2019 JP 2019196094; 30.07.2020 WO PCT/JP2020/029349
(71) Applicant: Kureha Corporation, Chuo-ku Tokyo 103-8552 (JP)
(72) Inventor: KATSURAO, Takumi, Tokyo 103-8552 (JP); UCHIDA, Junya, Tokyo 103-8552 (JP); SAKABE, Hiroshi, Tokyo 103-8552 (JP); ISHIZU, Masaki, Tokyo 103-8552 (JP)
(74) Representative: Hoefer & Partner Patentanwälte mbB
(86) International application number: PCT/JP2020/040499
(87) International publication number: WO 2021/085493

(57) **Abstract**

An object is to provide a composition which has performance, such as emission wavelength, of carbon quantum dots in a desired range and in which carbon quantum dots and layered clay minerals are uniformly dispersed, and a method for producing the composition to obtain the composition simply and easily.

The carbon quantum dot-containing composition achieving the object described above containing a carbon quantum dot obtained by reacting a solid organic compound having a reactive group in the presence of a layered clay mineral, and the layered clay mineral.

## Description

### [TECHNICAL FIELD]

The present invention relates to a carbon quantum dot-containing composition and a method for producing the same.

### [BACKGROUND ART]

Carbon quantum dots are stable carbon-based nanoparticles having a particle size of approximately a few nm to a several tens of nm. Since carbon quantum dots exhibit excellent fluorescence characteristics, carbon quantum dots are expected to be used as photonics materials such as solar batteries, displays, and security inks. Furthermore, because of low toxicity and biocompatibility, application in medical fields such as bio imaging is also expected.

Various methods have been proposed as methods for producing carbon quantum dots. For example, Patent Document 1 describes a method of obtaining carbon quantum dots by heating a solution containing a polyphenol and an amine compound and carbonizing (reacting) these (e.g., Patent Document 1).

Meanwhile, depending on the purpose of carbon quantum dots, mixing of the carbon quantum dots obtained by a method such as the method described above and various clay minerals has been proposed. For example, Patent Document 2 describes a composition for fingerprint detection in which carbon quantum dots and montmorillonite are mixed. Furthermore, Patent Document 3 describes a pickering emulsion containing carbon quantum dots and montmorillonite. Furthermore, Patent Document 4 describes a water purification material containing carbon quantum dots and a clay mineral.

Furthermore, Patent Document 5 proposes a method for preparing a composition containing carbon quantum dots and a clay mineral by mixing a mineral such as zeolite and furfuryl alcohol that is liquid at a normal temperature and heating these.

### [Citation List]

### [Patent Document]

Patent Document 1: JP 2018-035035 A
Patent Document 2: CN 108951280 A
Patent Document 3: CN 107129804 A
Patent Document 4: US 2018/0,291,266 A
Patent Document 5: JP 2018-131621 A

### [SUMMARY OF INVENTION]

### [TECHNICAL PROBLEM]

In general, quantum dots have different performances, such as emission wavelengths, depending on the particle sizes thereof. However, when carbon quantum dots are prepared by an ordinary method, adjustment to a desired particle size is difficult, and for example, adjustment of the emission wavelength to a desired range is also difficult. Furthermore, in the case where mixing with a clay mineral is performed after preparation of carbon quantum dots as described in Patent Documents 2 to 4, uniform mixing is difficult, and the process tends to be complicated. Furthermore, in the method of Patent Document 5, it is difficult to prepare carbon quantum dots having a maximum fluorescence wavelength in the visible light region and excellent fluorescence quantum efficiency.

The present invention has been made in view of the above problems. An object of the present application is to provide a composition which has, for example, a maximum fluorescence wavelength in a visible light region and in which carbon quantum dots and layered clay minerals are uniformly dispersed, and a method for producing the composition to obtain the composition simply and easily.

### [SOLUTION TO PROBLEM]

The present invention provides a carbon quantum dot-containing composition described below.
The carbon quantum dot-containing composition containing a carbon quantum dot obtained by reacting a solid organic compound having a reactive group in the presence of a layered clay mineral, and the layered clay mineral.

The present invention also provides a method for producing a carbon quantum dot-containing composition described below.
A method for producing a carbon quantum dot-containing composition, the carbon quantum dot-containing composition containing a layered clay mineral and a carbon quantum dot, the method comprising: preparing a mixture of a solid organic compound having a reactive group and a layered clay mineral, and preparing a carbon quantum dot by heating the mixture and reacting the mixture with the organic compound.

### [ADVANTAGEOUS EFFECTS OF INVENTION]

The carbon quantum dots contained in the carbon quantum dot-containing composition according to an embodiment of the present invention have a maximum fluorescence wavelength in a visible light region and the performance thereof is in a desired range. Furthermore, in the carbon quantum dot-containing composition, the carbon quantum dots and the layered clay minerals are uniformly dispersed. Thus, it is expected that the desired performance is maintained for a long period of time. Furthermore, according to the production method of an embodiment of the invention of the present application, the carbon quantum dot-containing composition can be prepared by a simple and easy method.

### [BRIEF DESCRIPTION OF DRAWINGS]

FIG. 1 is a graph showing the results of a case where the compositions of Example 4 and Comparative Example 3 are subjected to powder X-ray diffraction analysis.
FIG. 2 is a graph showing the result of a case where the composition of Example 4 is subjected to thermogravimetric analysis.

### [DESCRIPTION OF EMBODIMENTS]

The carbon quantum dot-containing composition according to an embodiment of the present invention contains a carbon quantum dot and a layered clay mineral. In the present specification, the carbon quantum dot refers to a carbon particle having a particle size of 1 to 100 nm obtained by reacting a solid organic compound having a reactive group. Note that "reaction" in the present specification refers to formation of an annular structure (graphite structure) by subjecting an organic compound having a functional group to a reaction such as dehydration, decarboxylation, and dehydrogenation.

As described above, in the case where carbon quantum dots are prepared by a known ordinary method, controlling of the particle size is difficult, and controlling of emission wavelength or the like is also difficult. Furthermore, in the case where a composition containing carbon quantum dots is prepared, typically, mixing with a layered clay mineral and the like is performed after such carbon quantum dots are prepared. However, in such a method, it was difficult to uniformly mix the carbon quantum dots and the layered clay mineral. Furthermore, carbon quantum dots having a maximum fluorescence wavelength in a visible light region could not be obtained only by mixing a clay mineral, such as zeolite, and furfuryl alcohol and heating.

Meanwhile, in the invention of the present application, a carbon quantum dot-containing composition (hereinafter, also simply referred to as "composition)" is obtained by reacting a solid organic compound having a reactive group in the presence of a layered clay mineral. When the composition is prepared as described above, a composition, in which particle sizes of carbon quantum dots are uniform, that is, in which performance such as emission wavelength is controlled, can be obtained. Furthermore, in the composition, formation of aggregation of carbon quantum dots can be suppressed. This reason is not clear but is estimated as follows.

When the organic compound, which is a raw material of the carbon quantum dots, is reacted, the reaction proceeds three-dimensionally around the surrounding molecules, and thus the particle sizes of the formed carbon quantum dots tend to be varied. Furthermore, carbon quantum dots have a large intermolecular force, and processing of the obtained carbon quantum dots into a finer carbon quantum dots is difficult, and aggregates tend to be formed. It is conceived that, when the particle size of a carbon quantum dot is relatively large, the carbon quantum dot cannot enter between layers of the layered clay mineral, and uniform mixing is difficult.

Meanwhile, in an embodiment of the present invention, a solid organic compound that serves as a raw material for carbon quantum dots and that has a reactive group, and a layered clay mineral are mixed, and in this state, the organic compound is reacted. It is conceived that, when mixing is performed in the condition where the organic compound and the layered clay mineral are both solid, a part of the organic compound enters between layers of the layered clay mineral, and thus adequate amount is supplied to the reaction. Furthermore, because the space between layers of the layered clay mineral is narrow, aggregation of the organic compound is readily divided, and thus carbon quantum dots having uniform particle sizes are readily prepared. In addition, because the space between layers becomes substantially constant in the layered clay mineral, the particle sizes of the carbon quantum dots tend to be uniform. Furthermore, because the organic compound that serves as the raw material is finely dispersed, it is also possible to make the particle size of the resulting carbon quantum dot smaller.

Furthermore, when the carbon quantum dots are prepared according to an embodiment of the present invention, a part of the carbon quantum dots enter into layers of the layered clay mineral (complex). Therefore, in addition to forming the uniform dispersion state of the carbon quantum dots and the layered clay minerals, the carbon quantum dots are less likely to aggregate over a long period of time, and a desired performance tends to be stably achieved.

Note that, as in the composition according to an embodiment of the present invention, in the case where aggregation of carbon quantum dots is less and a proportion of carbon quantum dots that are dispersed is large, the specific surface area of the composition becomes small because the carbon quantum dots cover surfaces of layers constituting the layered clay mineral. Note that the surfaces of layers constituting the layered clay mineral means surfaces of layers located in an inner part of the layered clay mineral as well as outer surfaces of the layered clay mineral. In such a composition, the specific surface area can be used as an indicator of dispersibility of carbon quantum dots. However, depending on the type of the layered clay mineral, the value of specific surface area of the clay itself is small, and difference in dispersibility of carbon dots may not be expressed as the difference of the specific surface area.

Note that the maximum fluorescence wavelength of the composition according to an embodiment of the present invention is preferably in a range of 380 to 800 nm, and more preferably in a range of 400 to 750 nm. When the maximum fluorescence wavelength is in the range, the amount of visible light emitted from the composition tends to be adequate. Note that the maximum fluorescence wavelength is a value measured by preparing a measurement sample by sandwiching the composition in KBr plates and performing pressing, and irradiating the measurement sample with an excitation light by using a spectrofluorometer. Among measured fluorescence, a wavelength, at which intensity of fluorescence is maximum upon excitation at a wavelength at which the internal quantum efficiency is maximum, is used as the maximum fluorescence wavelength.

Furthermore, the internal quantum efficiency of the carbon quantum dot-containing composition according to an embodiment of the present invention is preferably 2.0% or greater, and more preferably 2.3% or greater. The internal quantum efficiency is defined as "a value obtained by dividing energy of light emitted from a composition by energy of excitation light absorbed to the composition" and is a value measured by a spectrofluorometer.

Note that the composition according to an embodiment of the present invention is only required to contain a carbon quantum dot and a layered clay mineral; however, in a range that does not impair the purpose and effect of the present invention, other components such as a surfactant to enhance dispersibility and a light emitting body besides the carbon quantum dot may be contained.

### Carbon Quantum Dot

The carbon quantum dot contained in the composition according to an embodiment of the present invention is a quantum dot obtained by reacting a solid organic compound having a reactive group in the presence of a layered clay mineral. Note that the organic compound having a reactive group and the preparation method of the carbon quantum dot will be described in detail in the preparation method of the composition described below.

The emission wavelength and the structure of the carbon quantum dot are not particularly limited. The emission wavelength and the structure of the carbon quantum dot are determined depending on, for example, the type of the organic compound to be used for preparation of the carbon quantum dot, the type of the layered clay mineral, and the average layer spacing of the layered clay mineral.

However, when the carbon quantum dot is observed by an atomic force microscope (AFM), the height observed in a cross section is preferably from 1 to 100 nm, and more preferably from 1 to 80 nm. When the size of the carbon quantum dot is in the range, characteristics as a quantum dot tend to be adequately achieved.

Furthermore, the carbon quantum dot preferably emits visible light or near-infrared light when a light of a wavelength from 250 to 1000 nm is irradiated. The emission wavelength at this time is preferably from 300 to 2000 nm, and more preferably from 300 to 1500 nm, but more preferably visible light can be emitted, and specifically, even more preferably a light of 380 to 800 nm is emitted. When the emission wavelength is in the range, the composition according to an embodiment of the present invention can be used for various applications.

The carbon quantum dot preferably contains at least one type of group selected from the group consisting of a carboxy group, a carbonyl group, a hydroxy group, an amino group, a phosphonic acid group, a phosphoric acid group, a sulfo group, and a boronic acid group. The carbon quantum dot may contain only one type of group among these or may contain two or more types of groups. When the carbon quantum dot contains these groups, dispersibility of the carbon quantum dot and the composition in solvent or the like becomes excellent, and use in various applications is facilitated. The type of the functional group contained in the carbon quantum dot can be identified by, for example, an IR spectrum. Furthermore, the functional group contained in the carbon quantum dot is typically derived from a functional group contained in the organic compound.

The amount of the carbon quantum dots in the composition is preferably from 0.1 to 50 mass%, and more preferably from 0.5 to 30 parts by mass. When the amount of the carbon quantum dots in the composition is in the range described above, adequate light emission can be achieved from the composition. Furthermore, when the amount of the carbon quantum dots is in the range described above, aggregation of the carbon quantum dots in the composition is less likely to occur, and stability of the composition is enhanced.

### Layered Clay Mineral

The layered clay mineral has a structure, in which crystals in layer forms, the layers having silicon, aluminum, oxygen, and the like arranged in a predetermined structure, are layered and in which the space between layers is formed by electrostatic interaction and the like. In general, for example, water, metal ions, potassium and magnesium, water, and organic materials are incorporated in between crystalline layers. The layered clay mineral may be an anion exchange layered clay mineral or a cation exchange layered clay mineral.

Examples of the layered clay mineral include smectite, layered double hydroxide, kaolinite, and mica. Among these, smectite or layered double hydroxide is preferred from the perspective of having an average layer spacing appropriate for supporting carbon quantum dots (or organic compound described below) and facilitating preparation of carbon quantum dots having a desired particle size.

Smectite is a clay mineral that swells by water or the like, and examples thereof include saponite, montmorillonite, hectorite, beidellite, nontronite, sauconite, and stevensite.

Meanwhile, a layered double hydroxide is a double hydroxide obtained by forming a solid solution of a divalent metal oxide and a trivalent metal ion, and examples thereof include hydrotalcite, hydrocalumite, hydromagnesite, and pyroaurite.

The layered clay mineral may be a natural product or an artificial product. Furthermore, the layered clay mineral may be a product, in which the hydroxy group contained in the crystalline layer may be substituted with fluorine. Furthermore, the layered clay mineral may be a product in which, the interlayer ion may be substituted with an alkali metal ion, an alkaline earth metal ion, an aluminum ion, an iron ion, or an ammonium ion. Furthermore, the layered clay mineral may be modified with various organic materials and, for example, may be smectite that is chemically modified with a quaternary ammonium salt compound or a quaternary pyridinium salt compound.

The amount of the layered clay mineral in the composition is preferably from 50 to 99.9 mass%, and more preferably from 70 to 99.5 mass%. When the amount of the layered clay mineral is in the range described above, relatively, the amount of the carbon quantum dots becomes adequately large, and thus adequate amount of light emission can be achieved. Furthermore, when the amount of the layered clay mineral is in the range described above, the carbon quantum dots can be adequately supported by the layered clay mineral, and dispersibility of carbon quantum dots tends to be excellent.

### Preparation Method of Composition

The composition containing the carbon quantum dot and the layered clay mineral described above can be prepared by preparing a mixture of a solid organic compound having a reactive group and a layered clay mineral (mixture preparation), and preparing a carbon quantum dot by heating the mixture and reacting the mixture with the organic compound (carbon quantum dot preparation).

### • Mixture Preparation

In the mixture preparation, a mixture in which a solid organic compound having a reactive group and a layered clay mineral are substantially uniformly mixed is prepared. The organic compound is not particularly limited as long as the organic compound is a compound that has a reactive group, that is solid, and that can form carbon quantum dots by a reaction. In the present specification, "reactive group" means a group that is for causing a polycondensation reaction or the like among the organic compounds in the carbon quantum dot preparation described below and is a group that contributes to formation of a main backbone of the carbon quantum dot. Note that, after preparation (reaction) of carbon quantum dots, some of these reactive groups may remain. Examples of the reactive group include a carboxy group, a hydroxy group, an amino group, and a boronic acid group. Note that, in the mixture preparation, two or more types of organic compounds may be mixed with the layered clay mineral. In this case, a plurality of organic compounds preferably has a group that is readily react to each other. Furthermore, in the present specification, "solid" means being solid at the time of mixing with the layered clay mineral. Typically, mixing of the layered clay mineral and the organic compound is preferably performed at normal temperature, and thus a compound that is solid at normal temperature is preferred.

Examples of the organic compound having a reactive group include carboxylic acid, alcohols, phenols, amine compounds, boron compounds, and saccharides. As described above, the organic compound is only required to be solid at a temperature at the time of mixing with the layered clay mineral, and may be liquid at normal temperature.

The carboxylic acid is only required to be a compound having at least one carboxylic acid in a molecule (except those corresponding to phenols, amine compounds, or saccharides). Examples of the carboxylic acid include monocarboxylic acids such as formic acid and acetic acid; polycarboxylic acids that are divalent or higher such as oxalic acid, malonic acid, succinic acid, maleic acid, fumaric acid, itaconic acid, and polyacrylic acid; and hydroxy acids such as citric acid, glycolic acid, lactic acid, tartaric acid, and malic acid.

The alcohol is only required to be a compound having at least one hydroxy group (except those corresponding to carboxylic acids, phenols, amine compounds, or saccharides). Examples of the alcohol include polyhydric alcohols such as ethylene glycol, glycerol, erythritol, pentaerythritol, ascorbic acid, and polyethylene glycol.

The phenols are only required to be compounds having structures, in which a hydroxy group is bonded to a benzene ring. Examples of the phenols include phenol, catechol, resorcinol, hydroquinone, phloroglucinol, pyrogallol, 1,2,4-trihydroxybenzene, gallic acid, tannin, lignin, catechin, anthocyanin, rutin, chlorogenic acid, lignan, and curcumin.

Examples of the amine compound include 1,2-phenylenediamine, 1,3-phenylenediamine, 1,4-phenylenediamine, urea, thiourea, ammonium thiocyanate, ethanolamine, 1-amino-2-propanol, melamine, cyanuric acid, barbituric acid, folic acid, ethylenediamine, polyethylene imine, dicyandiamide, guanidine, aminoguanidine, formamide, glutamic acid, aspartic acid, cysteine, arginine, histidine, lysine, glutathione, RNA, and DNA.

Examples of the boron compound include compounds having a boronic acid group and specifically include phenylboronic acid and pyridineboronic acid.

Examples of the saccharide include glucose, sucrose, glucosamine, cellulose, chitin, and chitosan.

Among those described above, an organic compound that allows a condensation reaction to proceed effectively is preferred, and preferred examples include carboxylic acid, phenols, an amine compound, or a combination of carboxylic acid and an amine compound. Furthermore, when the organic compound contains an amine compound, light-emitting characteristics are enhanced by an N atom being doped, and thus it is preferred. Note that, also when the organic compound has a heteroatom other than the N atom, the same effect is expected.

Furthermore, among those described above, an organic compound that is solid at normal temperature is preferred from the perspective of capability of being mixed with the layered clay mineral at normal temperature. Among those described above, a compound having a melting point of 30°C or higher is more preferred, and a compound having a melting point of 45°C or higher is even more preferred.

Meanwhile, the layered clay mineral to be combined with the organic compound is the same as the layered clay mineral described above (the layered clay mineral contained in the composition). The layered clay mineral is preferably selected based on the type of the reactive group contained in the organic compound and the emission wavelength of the desired carbon quantum dot, that is, the particle size of the desired carbon quantum dot. For example, in the case where the reactive group contained in the organic compound becomes an anion, an anion exchange layered clay mineral may be selected. Similarly, in the case where the reactive group contained in the organic compound becomes a cation, a cation exchange layered clay mineral may be selected.

Meanwhile, the average layer spacing of the layered clay mineral combined with the organic compound is appropriately selected based on the molecular structure of the organic compound and the particle size of the desired carbon quantum dot, and is preferably from 0.1 to 10 nm, and more preferably from 0.1 to 8 nm. The average layer spacing of the layered clay mineral can be determined by X-ray diffraction instrument or the like. Note that the average layer spacing of the layered clay mineral refers to the spacing between a bottom face of a first crystalline layer and a top face of a second crystalline layer adjacent to the first crystalline layer, of the layered clay mineral. As described above, the carbon quantum dots are synthesized using spacing between layers of the layered clay mineral as a template. Therefore, when the average layer spacing of the layered clay mineral is 10 nm or less, carbon quantum dots having a shorter emission wavelength tend to be obtained. On the other hand, when the average layer spacing is 0.1 nm or greater, a part of the organic compound tends to enter in between these, and carbon quantum dots are readily formed using spacing between layers of the layered clay mineral as a template.

Note that, to adjust the average layer spacing of the layered clay mineral, the layered clay mineral may be swelled by water or various solvents. Examples of the organic solvent include methanol, ethanol, hexane, toluene, chloroform, dimethylformamide, and dimethyl sulfoxide. The amount of the solvent in the mixture (the organic compound, the layered clay mineral, and the solvent) is preferably from 10 to 80 mass%, and more preferably from 10 to 70 wt%.

Note that the method of mixing the organic compound and the layered clay mineral is not particularly limited as long as the method can mix these uniformly. For example, mixing may be performed while grinding is performed in a mortar, or mixing may be performed while crushing is performed by a ball mill or the like.

Furthermore, the mixing ratio between the organic compound and the layered clay mineral is appropriately selected based on the content ratio between the desired carbon dot quantum and the layered clay mineral.

### • Carbon Quantum Dot Preparation

The carbon quantum dot preparation is a process of heating the mixture described above and reacting the mixture with the organic compound to form carbon quantum dots. The heating method of the mixture is not particularly limited as long as the organic compound can react, and examples thereof include a method of heating and a method of irradiating with an electromagnetic wave (e.g., microwave).

When the mixture is heated, the heating temperature is preferably from 70 to 700°C, more preferably from 100 to 500°C, and even more preferably from 100 to 300°C. Furthermore, the heating time is preferably from 0.01 to 45 hours, more preferably from 0.1 to 30 hours, and even more preferably from 0.5 to 10 hours. The particle size of the resulting carbon quantum dot and the emission wavelength can be adjusted by the heating time. Furthermore, at this time, heating may be performed in a non-oxidizing atmosphere while an inert gas such as nitrogen is circulated.

In the case where irradiation with an electromagnetic wave (e.g., microwave) is performed, the wattage is preferably from 1 to 1500 W, and more preferably from 1 to 1000 W. Furthermore, the heating time by the electromagnetic wave (e.g., microwave) is preferably from 0.01 to 10 hours, more preferably from 0.01 to 5 hours, and even more preferably from 0.01 to 1 hour. The particle size of the resulting carbon quantum dot and the emission wavelength can be adjusted by the irradiation time of the electromagnetic wave (microwave).

The electromagnetic wave irradiation can be performed by, for example, a semiconductor type electromagnetic wave radiation device. The irradiation with the electromagnetic wave is preferably performed while the temperature of the mixture is checked. For example, the electromagnetic wave irradiation is preferably performed while the temperature is adjusted to from 70 to 700°C, and more preferably from 100 to 500°C.

A carbon quantum dot-containing composition in which the carbon quantum dots and the layered clay mineral are uniformly dispersed can be obtained by the carbon quantum dot preparation. Furthermore, at this time, the composition may be washed with an organic solvent, and unreacted substances or by-products may be removed for purification.

### Applications

As described above, when the carbon quantum dot-containing composition is prepared through the mixture preparation and the carbon quantum dot preparation described above, dispersibility of carbon quantum dots is enhanced compared to a case where carbon quantum dots are prepared and then mixed with a layered clay mineral. Note that the carbon quantum dot-containing composition having high dispersibility of carbon quantum dots exhibits excellent light emission in the visible light region and is useful as a separating agent that separates a specific substance by utilizing a functional group contained in a carbon quantum dot. Thus, the composition can be used for various applications.

The application of the carbon quantum dot-containing composition described above is not particularly limited and can be used for, for example, solar batteries, displays, security inks, quantum dot lasers, biomarkers, lighting materials, thermoelectric materials, photocatalysts, and separating agents for a specific substance, based on the performance of the carbon quantum dots.

### [EXAMPLES]

Hereinafter, specific examples of the present invention will be described together with comparative examples, but the present invention is not limited thereto.

### [Example 1]

Using a mortar, 1.0 g of saponite (Sumecton SA, available from Kunimine Industries Co., Ltd.; hereinafter the same) and 0.15 g of phloroglucinol dihydrate were ground. The mixture was charged in a screw-top test tube having an internal volume of 15 mL and the screw-top test tube was sealed with a screw cap provided with a rubber packing. Then, heating was performed at 200°C for 3 hours while nitrogen was circulated in the screw-top test tube, and a carbon quantum dot-containing composition (complex) containing carbon quantum dots and a layered clay mineral was prepared.

### [Example 2]

Using a mortar, 0.5 g of hydrotalcite (available from FUJIFILM Wako Pure Chemical Corporation), 0.15 g of citric acid, and 0.1 g of dicyandiamide were ground. The mixture was charged in a screw-top test tube having an internal volume of 15 mL and the screw-top test tube was sealed with a screw cap provided with a rubber packing. Then, heating was performed at 170°C for 90 minutes while nitrogen was circulated in the screw-top test tube, and a carbon quantum dot-containing composition (complex) containing carbon quantum dots and a layered clay mineral was prepared.

### [Example 3]

Using a mortar, 1.0 g of saponite and 0.15 g of phloroglucinol dihydrate were ground. The mixture was charged in a screw-top test tube having an internal volume of 15 mL and the screw-top test tube was sealed with a screw cap provided with a rubber packing. Then, heating was performed at 155°C for 3 hours while nitrogen was circulated in the screw-top test tube, and a carbon quantum dot-containing composition (complex) containing carbon quantum dots and a layered clay mineral was prepared.

### [Example 4]

Using a mortar, 1.0 g of saponite and 0.4 g of phloroglucinol dihydrate were ground. The mixture was charged in a screw-top test tube having an internal volume of 15 mL and the screw-top test tube was sealed with a screw cap provided with a rubber packing. Then, heating was performed at 200°C for 3 hours while nitrogen was circulated in the screw-top test tube, and a carbon quantum dot-containing composition (complex) containing carbon quantum dots and a layered clay mineral was prepared.

### [Example 5]

Using a mortar, 0.5 g of saponite, 0.15 g of citric acid, and 0.1 g of dicyandiamide were ground. The mixture was charged in a screw-top test tube having an internal volume of 15 mL and the screw-top test tube was sealed with a screw cap provided with a rubber packing. Then, heating was performed at 170°C for 90 minutes while nitrogen was circulated in the screw-top test tube, and a carbon quantum dot-containing composition (complex) containing carbon quantum dots and a layered clay mineral was prepared.

### [Example 6]

Using a mortar, 1.0 g of saponite, 0.02 g of phloroglucinol dihydrate, and 0.1 g of resorcinol were ground. The mixture was charged in a screw-top test tube having an internal volume of 15 mL and the screw-top test tube was sealed with a screw cap provided with a rubber packing. Then, heating was performed at 200°C for 3 hours while nitrogen was circulated in the screw-top test tube, and a carbon quantum dot-containing composition (complex) containing carbon quantum dots and a layered clay mineral was prepared.

### [Example 7]

Using a mortar, 0.56 g of saponite and 0.084 g of phloroglucinol dihydrate were ground. The mixture was charged in a screw-top test tube having an internal volume of 15 mL and the screw-top test tube was sealed with a screw cap provided with a rubber packing. Then, the screw-top test tube was set at a point of electric field maximum of a semiconductor type electromagnetic wave radiation device (rectangular waveguide resonator), available from Fujidempa Kogyo Co., Ltd., and irradiated with an electromagnetic wave of 2.45 GHz while nitrogen was circulated in the screw-top test tube, under agitation. Thus, a carbon quantum dot-containing composition (complex) containing carbon quantum dots and a layered clay mineral was prepared.

Note that, for the electromagnetic wave irradiation by the semiconductor type electromagnetic wave radiation device, TE103 single mode was employed. The semiconductor type electromagnetic wave radiation device is composed of a resonator having a three stub tuner, iris, and plunger, a semiconductor type electromagnetic wave oscillator, and a monitor for observing input power and reflected power. The temperature at the time of electromagnetic wave irradiation was measured by using an infrared radiation thermometer. The reflected power was suppressed to lower than 0.1 W by adjusting the three stub tuner and the plunger while the semiconductor type electromagnetic wave oscillator oscillates a 2.45 GHz electromagnetic wave of 2 W. One minute after the electromagnetic wave irradiation, the temperature indicated by the infrared radiation thermometer became 200°C, and reaction was performed for 4 minutes since the thermometer indicated 200°C.

### [Example 8]

Using a mortar, 1.0 g of saponite and 0.15 g of phloroglucinol dihydrate were ground. The mixture was charged in a screw-top test tube having an internal volume of 15 mL and the screw-top test tube was sealed with a screw cap provided with a rubber packing. Then, heating was performed at 120°C for 3 hours while nitrogen was circulated in the screw-top test tube, and a carbon quantum dot-containing composition (complex) containing carbon quantum dots and a layered clay mineral was prepared.

### [Comparative Example 1]

In a screw-top test tube having an internal volume of 15 mL, 1.2 g of phloroglucinol dihydrate was charged and heated at 200°C for 3 hours in a nitrogen stream, and thus carbon quantum dots were synthesized. Then, 0.12 g of the synthesized carbon quantum dots was weighed, and this was mixed with 1.0 g of saponite while both materials were ground in a mortar, and thus a carbon quantum dot-containing composition was obtained.

### [Comparative Example 2]

Using a mortar, 0.15 g of citric acid and 0.1 g of dicyandiamide were ground. In a screw-top test tube having an internal volume of 15 mL, the mixture was charged and heated at 170°C for 90 minutes in a nitrogen stream, and thus carbon quantum dots were synthesized. Then, 35.0 mg of the synthesized carbon quantum dots was weighed, and this was mixed with 70.0 mg of hydrotalcite while both materials were ground in a mortar, and thus a carbon quantum dot-containing composition was obtained.

### [Comparative Example 3]

In a screw-top test tube having an internal volume of 15 mL, 1.2 g of phloroglucinol dihydrate was charged and heated at 200°C for 3 hours in a nitrogen stream, and thus carbon quantum dots were synthesized. Then, 0.31 g of the synthesized carbon quantum dots was weighed, and this was mixed with 1.0 g of saponite while both materials were ground in a mortar, and thus a carbon quantum dot-containing composition was obtained.

### [Comparative Example 4]

Using a mortar, 0.15 g of citric acid and 0.1 g of dicyandiamide were ground. In a screw-top test tube having an internal volume of 15 mL, the mixture was charged and heated at 170°C for 90 minutes in a nitrogen stream, and thus carbon quantum dots were synthesized. Then, 50.0 mg of the synthesized carbon quantum dots was weighed, and this was mixed with 100.0 mg of saponite while both materials were ground in a mortar, and thus a carbon quantum dot-containing composition was obtained.

### [Comparative Example 5]

In a screw-top test tube having an internal volume of 15 mL, 1.0 g of saponite was impregnated with 0.15 g of furfuryl alcohol (liquid), and the screw-top test tube was sealed with a screw cap provided with a rubber packing. Then, heating was performed at 200°C for 3 hours while nitrogen was circulated in the screw-top test tube, and a carbon quantum dot-containing composition (complex) containing carbon quantum dots and a layered clay mineral was prepared.

### [Comparative Example 6]

In a screw-top test tube having an internal volume of 15 mL, 1.0 g of activated clay (available from FUJIFILM Wako Pure Chemical Corporation) was impregnated with 0.15 g of furfuryl alcohol (liquid), and the screw-top test tube was sealed with a screw cap provided with a rubber packing. Then, heating was performed at 155°C for 3 hours while nitrogen was circulated in the screw-top test tube, and a carbon quantum dot-containing composition (complex) containing carbon quantum dots and a layered clay mineral was prepared.

### [Comparative Example 7]

Dicyandiamide was charged in a screw-top test tube having an internal volume of 15 mL and the screw-top test tube was sealed with a screw cap provided with a rubber packing. Then, heating was performed at 200°C for 3 hours while nitrogen was circulated in the screw-top test tube, and carbon quantum dots were prepared.

### Comparative Example 8

Using a mortar, 1.0 g of zeolite (HSZ-320NAA, available from Tosoh Corporation; hereinafter the same) and 0.15 g of phloroglucinol dihydrate were ground. The mixture was charged in a screw-top test tube having an internal volume of 15 mL and the screw-top test tube was sealed with a screw cap provided with a rubber packing. Then, heating was performed at 200°C for 3 hours while nitrogen was circulated in the screw-top test tube, and a carbon quantum dot-containing composition (complex) containing carbon quantum dots and a clay mineral was prepared.

### Comparative Example 9

In a screw-top test tube having an internal volume of 15 mL, 1.0 g of zeolite was impregnated with 0.15 g of furfuryl alcohol (liquid at normal temperature), and the screw-top test tube was sealed with a screw cap provided with a rubber packing. Then, heating was performed at 80°C for 12 hours while nitrogen was circulated in the screw-top test tube, and a carbon quantum dot-containing composition (complex) containing carbon quantum dots and a clay mineral was prepared.

### Comparative Example 10

In a screw-top test tube having an internal volume of 15 mL, 1.0 g of zeolite was impregnated with 0.15 g of furfuryl alcohol (liquid at normal temperature), and the screw-top test tube was sealed with a screw cap provided with a rubber packing. Then, heating was performed at 155°C for 3 hours while nitrogen was circulated in the screw-top test tube, and a carbon quantum dot-containing composition (complex) containing carbon quantum dots and a clay mineral was prepared.

### [Evaluation]

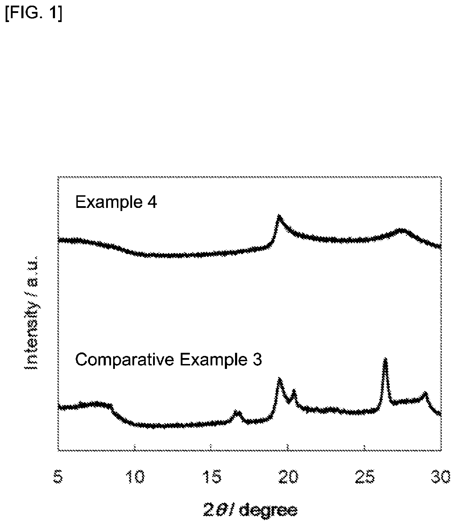

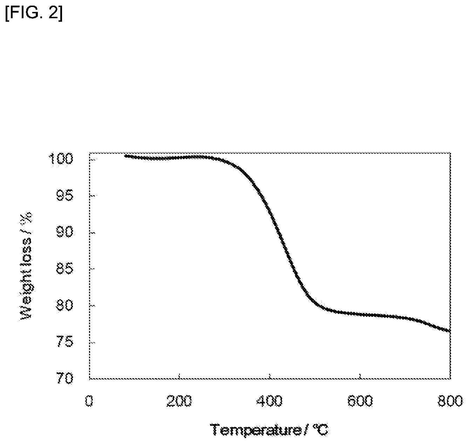

The average layer spacing of the layered clay mineral used in Examples and Comparative Examples, the specific surface area of the obtained composition, and the emission wavelength of the composition were evaluated as described below. The results are shown in Table 1. Furthermore, the aggregation condition of the carbon quantum dots in the compositions of Example 4 and Comparative Example 3 and the content of the carbon quantum dots of the composition of Example 4 were measured as described below. The results are shown in FIGS. 1 and 2.

### Measurement of Average Layer Spacing of Layered Clay Mineral

The average layer spacing of the layered clay mineral was evaluated by performing powder X-ray diffraction measurement at characteristic X-ray wavelength of 1.54 Å by using X'Pert-PRO MPD (available from PANalytical). The average layer spacing of the layered clay mineral means a distance between crystalline layers constituting the layered clay mineral (spacing between a bottom face of a first crystalline layer and a top face of a second crystalline layer).

### Evaluation of Specific Surface Area

The specific surface area of the composition was evaluated by using Monosorb (available from Quantachrome Instruments). The value of specific surface area was determined by the single point BET method using a mixed gas of N₂:He = 20 vol%:80 vol%. As the sample, a sample that was dried at 150°C for 10 minutes was used.

### Evaluation of Maximum Fluorescence Wavelength

The measurement sample was prepared by sandwiching the composition in KBr plates and performing pressing. By using the spectrofluorometer FP-8500 (available from JASCO Corporation) for the measurement sample, the maximum fluorescence wavelength at the time when the sample was irradiated with an excitation light of a wavelength at a maximum internal quantum efficiency was evaluated.

### Evaluation of Aggregation Condition of Carbon Quantum Dots

The aggregation conditions of the carbon quantum dots of the compositions of Example 5 and Comparative Example 3 were evaluated by performing powder X-ray diffraction measurement at characteristic X-ray wavelength of 1.54 Å by using X'Pert-PRO MPD (available from PANalytical).

### Evaluation of Carbon Quantum Dot Content

By using a thermogravimetric analysis TGA 2 (available from Mettler), the carbon quantum dot content in the composition of Example 5 was evaluated based on an amount of weight loss measured at a temperature increasing rate of 10°C/min in an air stream of 40 mL/min.

### Identification of Internal Quantum Efficiency

The measurement sample was prepared by sandwiching the composition in KBr plates and performing pressing. By using the spectrofluorometer FP-8500 (available from JASCO Corporation) for the measurement sample, the internal quantum efficiency was evaluated by successively irradiating the sample with an excitation light having a maximum intensity in the range of 300 to 700 nm.

**[Table 1]**

| | Preparation method of composition | Organic compound | Layered clay mineral | Average layer spacing of layered clay mineral | Excitation wavelength | Maximum fluorescence wavelength | Specific surface area | Internal quantum efficiency |
|---|---|---|---|---|---|---|---|---|
| Example 1 | In the presence of layered clay mineral 200°C 3 h | Phloroglucinol dihydrate (solid) | Saponite (layered) | 0.2 nm | 440 nm | 537 nm | 42 m²/g | 2.4% |
| Example 2 | Same as above 170°C 1.5 h | Citric acid (solid) + dicyandiamide (solid) | Hydrotalcite (layered) | 0.3 nm | 400 nm | 492 nm | 32 m²/g | 10% |
| Example 3 | Same as above 155°C 3 h | Phloroglucinol dihydrate (solid) | Saponite (layered) | 0.2 nm | 400 nm | 468 nm | - | 2.1% |
| Example 4 | Same as above 200°C 3 h | Phloroglucinol dihydrate (solid) | Saponite (layered) | 0.2 nm | 420 nm | 543 nm | 1.4 m²/g | 2.4% |
| Example 5 | Same as above 170°C 1.5 h | Citric acid (solid) + dicyandiamide (solid) | Saponite (layered) | 0.2 nm | 400 nm | 530 nm | 18 m²/g | 3.1% |
| Example 6 | Same as above 200°C 3 h | Phloroglucinol dihydrate (solid) + resorcinol (solid) | Saponite (layered) | 0.2 nm | 400 nm | 500 nm | - | 5.0% |
| Example 7 | Same as above Microwave | Phloroglucinol dihydrate (solid) | Saponite (layered) | 0.2 nm | 440 nm | 539 nm | - | 3.0% |
| Example 8 | Same as above 120°C 3 h | Phloroglucinol dihydrate (solid) | Saponite (layered) | - | 360 nm | 427 nm | - | 4.0% |
| Comparative Example 1 | After synthesis of carbon quantum dot, mixed with layered clay mineral | Phloroglucinol dihydrate (solid) | Saponite (layered) | 0.2 nm | 340 nm | 416 nm | 184 m²/g | 0.89% |
| Comparative Example 2 | Same as above | Citric acid (solid) + dicyandiamide (solid) | Hydrotalcite (layered) | 0.3 nm | 400 nm | 540 nm | 32 m²/g | 1.0% |
| Comparative Example 3 | Same as above | Phloroglucinol dihydrate (solid) | Saponite (layered) | 0.2 nm | 360 nm | 424 nm | 149 m²/g | 1.0% |

| Comparative Example 4 | Same as above | Citric acid (solid) + dicyandiamide (solid) | Saponite (layered) | 0.2 nm | 440 nm | 560 nm | 34 m²/g | 1.6% |
|---|---|---|---|---|---|---|---|---|
| Comparative Example 5 | In the presence of layered clay mineral 200°C 3 h | Furfuryl alcohol (liquid) | Saponite (layered) | - | - | No maximum | - | - |
| Comparative Example 6 | Same as above 155°C 3 h | Furfuryl alcohol (liquid) | Activated clay (layered) | - | - | No maximum | - | - |
| Comparative Example 7 | Only carbon source 170°C 1.5 h | Dicyandiamide (solid) | No | - | 280 nm | 356 nm | - | 5.2% |
| Comparative Example 8 | In the presence of zeolite 200°C 3 h | Phloroglucinol dihydrate (solid) | Zeolite (non-layered) | - | 400 nm | 529 nm | - | 1.2% |
| Comparative Example 9 | In the presence of zeolite 80°C 12 h | Furfuryl alcohol (liquid) | Zeolite (non-layered) | - | - | No maximum | - | - |
| Comparative Example 10 | In the presence of zeolite 155°C 3 h | Furfuryl alcohol (liquid) | Zeolite (non-layered) | - | - | No maximum | - | - |

As shown in the table above, in the case where the layered clay mineral and the solid organic compound were mixed to prepare the carbon quantum dots in the presence of the layered clay mineral and then the carbon quantum dot-containing composition containing the carbon quantum dots and the layered clay mineral was obtained, the carbon quantum dot-containing compositions had a maximum fluorescence wavelength in the range of 380 nm to 800 nm (Examples 1 to 8). Furthermore, all of these compositions had the internal quantum efficiencies of greater than 2.0%.

On the other hand, Comparative Example 1 and Comparative Example 3, in which the carbon quantum dots were synthesized first and then the carbon quantum dots and the layered clay mineral were mixed, each composition had a low internal quantum efficiency although light emission was confirmed. Furthermore, it is conceived that all of these compositions each had a large specific surface area, dispersion was not suitably performed, and aggregation of carbon quantum dots occurred. Furthermore, in Comparative Example 2, although the carbon quantum dots were prepared by the reaction temperature and reaction time identical to those of Example 2, the maximum fluorescence wavelength of the carbon quantum dots was long and the internal quantum efficiency was low. It is conceived that Example 2 resulted in a shorter fluorescence wavelength than that of Comparative Example 2 because the particle size of the carbon quantum dots became smaller by preparing the carbon quantum dots in the presence of the layered clay mineral. Furthermore, the composition of Comparative Example 4 had a large specific surface area although the ratio of the organic compound to the layered clay mineral was identical to that of Example 5. It is conceived that, in Example 5, because the carbon quantum dots were prepared in the presence of the layered clay mineral, the carbon quantum dots were effectively included in voids of the layered compound, and dispersibility of the carbon quantum dots became better than that of Comparative Example 4.

Furthermore, as illustrated in FIG. 1, in both of the compositions of Example 4 and Comparative Example 3, a diffraction peak derived from the layered clay mineral (peak around 2θ = 19°) was observed. Furthermore, in the composition of Example 4, any diffraction peak derived from aggregation of the carbon quantum dots was not observed, whereas in the composition of Comparative Example 3, sharp peaks derived from aggregation of the carbon quantum dots were observed around the diffraction angles 2θ = 17°, 20°, 26°, and 29°. Furthermore, in the composition of Example 4, shifting toward a small angle side (2θ = 6°) and broadening of the peak derived from layer order of the layered clay mineral (2θ = 8°) were observed. From this, it can be said that the carbon quantum dots were formed in between layers of the layered clay mineral in the preparation method of Example 4. Furthermore, it is conceived that, in the obtained composition, the carbon quantum dots were suitably dispersed in the layered clay mineral.

Furthermore, as shown in FIG. 2, when the amount of weight loss of the composition of Example 4 was measured, 21 mass% of weight loss was observed between approximately at 300°C to 550°C. From this result, it was calculated that the composition of Example 4 contained 21 mass% of the carbon quantum dots.

Furthermore, even in the case where the layered clay mineral and the organic compound were combined, in the case where liquid furfuryl alcohol was used as the organic compound, the maximum fluorescence wavelength was not observed (Comparative Examples 5 and 6). Furthermore, in the case where the layered clay mineral was not used, carbon quantum dots having a maximum fluorescence wavelength in visible light were not obtained (Comparative Example 7). Furthermore, in the case where zeolite (mineral that was not a layered clay mineral) and furfuryl alcohol were used as described in the Prior Art Document 5 described above, no maximum fluorescence wavelength was obtained in any regions (Comparative Examples 9 and 10).

This application claims priority to JP 2019-196094 filed on October 29, 2019 and PCT/JP2020/029349 filed on July 30, 2020. The contents described in the specification of said application are all incorporated herein by reference.

### [INDUSTRIAL APPLICABILITY]

According to the carbon quantum dot-containing composition of an embodiment of the present invention, excellent dispersibility of the carbon quantum dots and the layered clay mineral was achieved, and performance of the carbon quantum dots (e.g., maximum fluorescence wavelength being in the visible light region) can be adjusted to a desired range. Therefore, the carbon quantum dot-containing composition that can be used for various applications can be obtained.

## Claims

1. A carbon quantum dot-containing composition comprising:
a carbon quantum dot obtained by reacting a solid organic compound having a reactive group in the presence of a layered clay mineral, and
the layered clay mineral.

2. The carbon quantum dot-containing composition according to claim 1, wherein
a maximum fluorescence wavelength is in a range from 380 to 800 nm.

3. The carbon quantum dot-containing composition according to claim 1 or 2, wherein
an internal quantum efficiency is 2.0% or greater.

4. The carbon quantum dot-containing composition according to any one of claims 1 to 3, wherein
the layered clay mineral contains at least one type selected from the group consisting of smectite and layered double hydroxide.

5. The carbon quantum dot-containing composition according to any one of claims 1 to 4, wherein
the organic compound having a reactive group is at least one type of compound selected from the group consisting of carboxylic acid, alcohols, phenols, amine compounds, boron compounds, and saccharides.

6. The carbon quantum dot-containing composition according to any one of claims 1 to 5, wherein,
the carbon quantum dot contains at least one type of group selected from the group consisting of a carboxy group, a carbonyl group, a hydroxy group, an amino group, a phosphonic acid group, a phosphoric acid group, a sulfo group, and a boronic acid group.

7. A method for producing a carbon quantum dot-containing composition, the carbon quantum dot-containing composition containing a layered clay mineral and a carbon quantum dot,
the method comprising:
preparing a mixture of a solid organic compound having a reactive group and a layered clay mineral, and
preparing a carbon quantum dot by heating the mixture and reacting the mixture with the organic compound.

8. The method for producing a carbon quantum dot-containing composition according to claim 7, wherein
the carbon quantum dot is prepared by heating the mixture at 100°C to 500°C.

9. The method for producing a carbon quantum dot-containing composition according to claim 7 or 8, wherein
the carbon quantum dot is prepared by irradiating the mixture with an electromagnetic wave and heating the mixture.

10. The method for producing a carbon quantum dot-containing composition according to any one of claims 7 to 9, wherein
an average layer spacing of the layered clay mineral used in the preparing of the mixture is from 0.1 nm to 10 nm.
